# EUROPEAN PATENT APPLICATION

(11) **EP 1 577 013 A2**
(43) Date of publication of application: **21.09.2005**
(21) Application number: 05102112.9
(22) Date of filing: 17.03.2005
(51) Int. Cl.: B02C 1/00, B02C 19/14

(54) **Machine for glass grinding**

(30) Priority: 17.03.2004 IT MI20040505
(71) Applicant: ELLE.EFFE ITALIA S.r.l., 21047 Saronno-Varese (IT)
(72) Inventor: Maffioli, Stefano, 22074 Lomazzo-Como (IT); Falleri, Moreno, 22074 Lomazzo-Como (IT)
(74) Representative: De Gregori, Antonella

(57) **Abstract**

A machine for glass grinding, in particular for glass fine-grinding, comprising an outer casing (12) that encloses a bearer structure (13), a grinding mechanism (14) and a collection drawer (15) underneath for the ground glass, in which the grinding mechanism (14) is arranged on a slide (16) that can translate between a position inserted in the outer casing (12) and an extracted position, and it consists of a pair of grinding jaw groups (19, 20) arranged staggered and interacting with each other. One of the grinding jaw groups (20) is mobile with respect to the other pushed into such engagement by elastic elements (27) in a first direction, with a loading actuator group (29, 30, 31) of the elastic elements in the opposite direction being foreseen, with there also being foreseen hooking elements (32, 33) that engage the mobile second jaw group (20) in detached position with respect to the fixed first jaw group (19) to allow the introduction of a bottle (21) to be broken.

## Description

The present invention refers to a machine for glass grinding, in particular for glass fine-grinding.

Currently, the disposal of glass bottles represents a substantial drawback also giving rise to environmental pollution with broken parts that represent a danger to people and animals. Moreover, discarded bottles or parts of bottles represent a loss of important economic resources that could otherwise be at least partially recovered to be recycled and reused.

Therefore, in towns there is an increasing trend towards the collection of glass in general, and in particular the collection of bottles or similar to first of all carry out a recovery of resources and also to prevent the aforementioned environmental pollution that is the source of danger.

Moreover, bottles or similar have a substantial bulk both at the gathering and collection stage (for example inside suitable "banks") and at the collection stage in a public location that may be a bar or a restaurant and are the cause of relative problems.

It is therefore necessary to identify a solution to such problems of collection in restricted spaces.

The main purpose of the present invention is therefore that of making a solution to such a technical problem quoted above by making a machine or other device that makes such collection in restricted spaces easier.

Another purpose of the present invention is that of making a machine that, whilst answering such problems, is simple to use.

Yet another purpose of the present invention is that of being able to have a machine or device that is cost-effective, i.e. able to be used by a large number of users, and that also has a bulk that is limited to the minimum.

These purposes according to the present invention are accomplished by making a machine for glass grinding, in particular for glass fine-grinding, as outlined in claim 1.

Further characteristics of the invention are highlighted by the subsequent claims.

The characteristics and advantages of a machine for glass fine-grinding according to the present invention shall become clearer from the following description, given as an example and not for limiting purposes, referring to the attached schematic drawings, in which:
Figure 1 is a perspective view from the side and from above of a machine for glass fine-grinding according to the invention in open position, ready to grind a bottle or similar that is introduced inside of it.

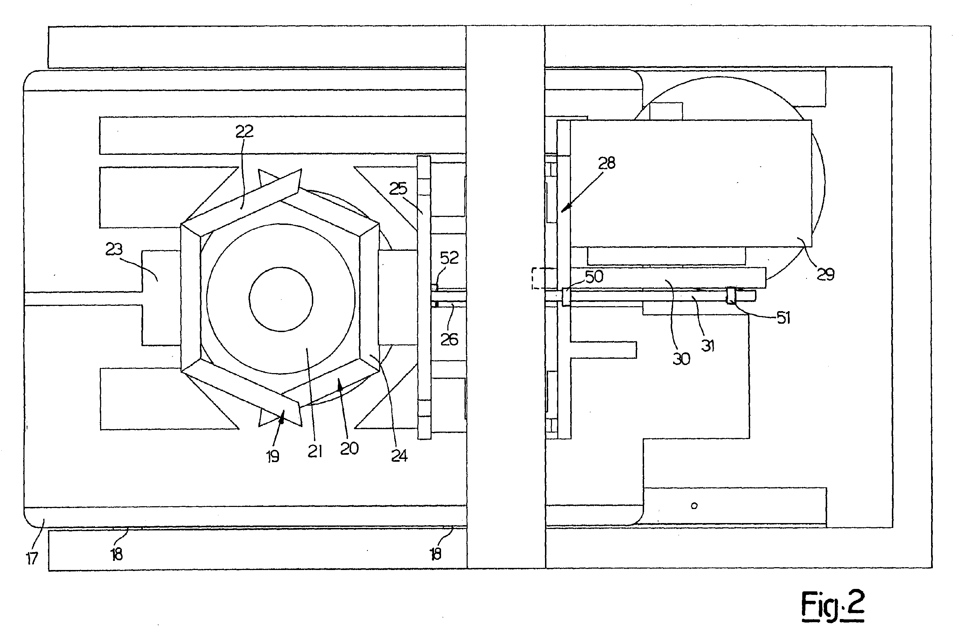

Figure 2 is a plan view from above of the machine shown in figure 1.

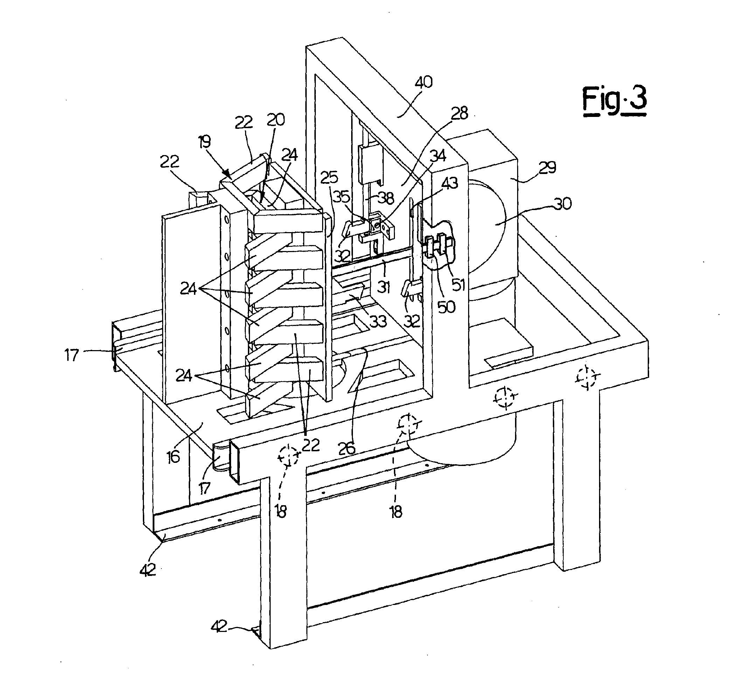

Figure 3 is a perspective view similar to the one shown in figure 1 in closed position, with grinding having already taken place.

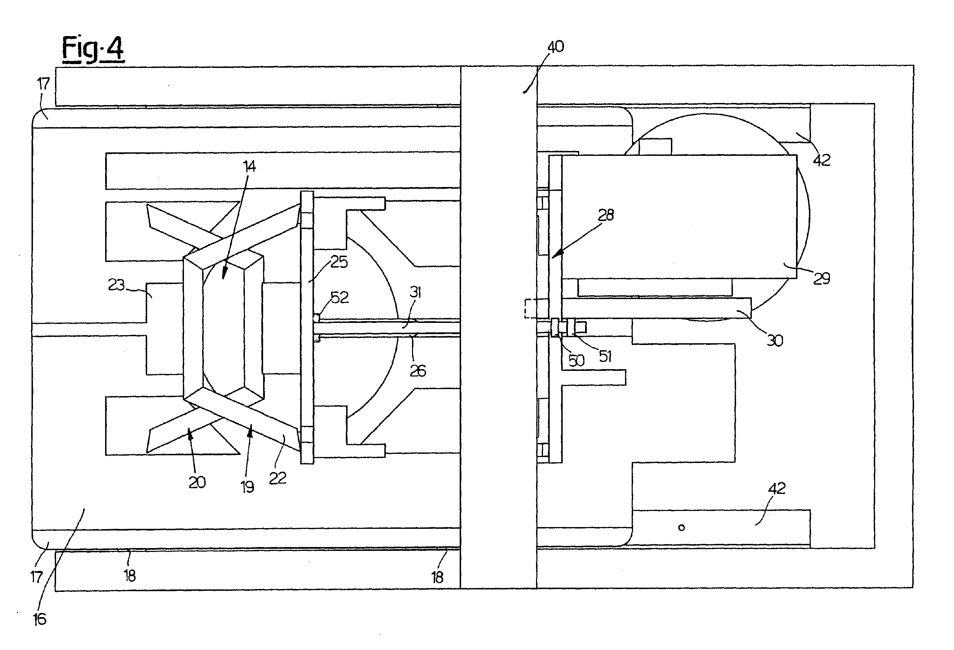

Figure 4 is a plan view from above of the machine shown in figure 3.
Figures 5 and 6 are perspective views from the outside of the machine of the previous figures with the mechanism extracted in the first and with the collection drawer extracted in the second.

With reference to the figures, a machine for glass grinding, in particular for glass fine-grinding, made according to the present invention, is shown wholly indicated with 11.

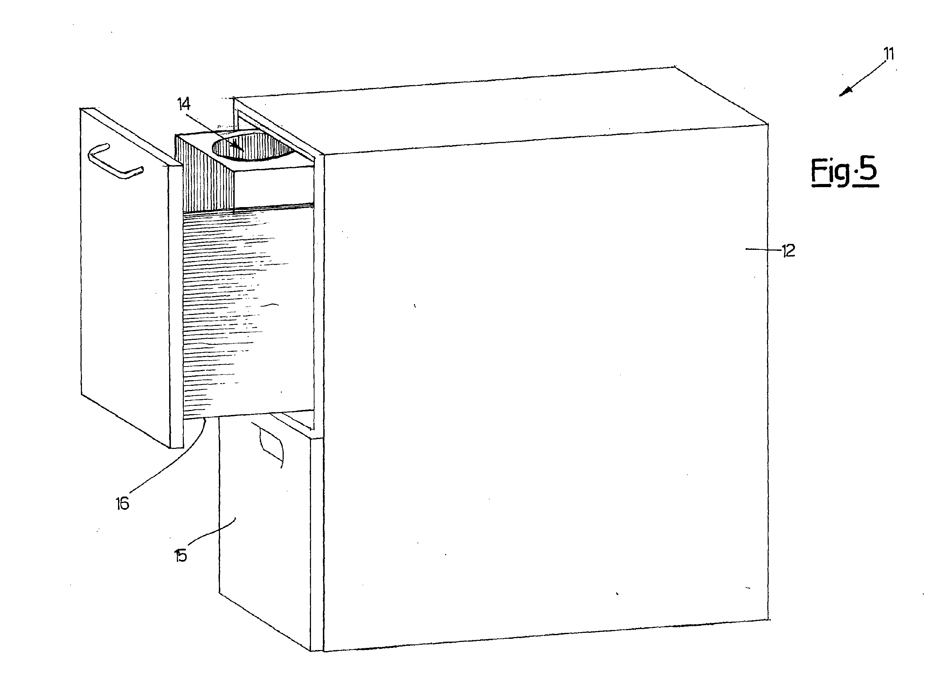

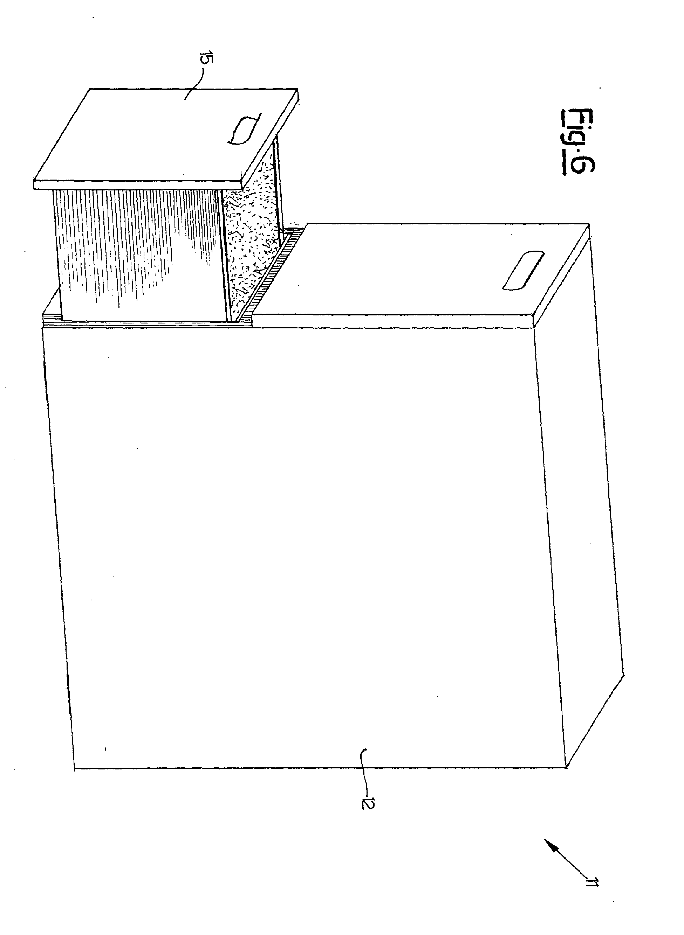

The machine 11 comprises an outer casing 12 (shown only in figures 5 and 6) that encloses a bearer structure 13, a grinding mechanism 14 and a collection drawer 15 underneath for ground glass.

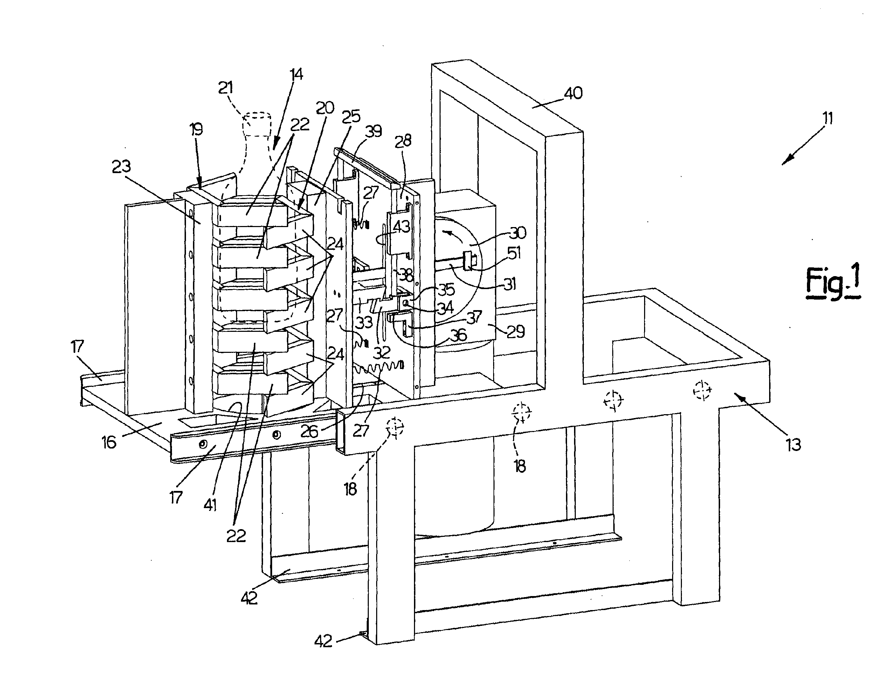

The bearer structure 13 carries, in the upper part, the grinding mechanism 14, arranged on a slide 16 that can translate between a position inserted in the outer casing 12 and an extracted position. Such a translation takes place through its side guide rails 17, able to slide on bearings 18 (schematised with a dotted and dashed line in figure 1) with respect to the bearer structure 13, on which they are arranged.

The slide 16 supports the grinding mechanism 14 comprising a pair of grinding jaw groups 19 and 20, inside which a bottle, schematised at 21, to be broken into small parts is housed.

A first jaw group 19 is fixed with respect to the slide 16 and consists of open C-shaped elements 22, spaced apart in the vertical direction and fitted to a fastening plate 23. Interfacing with this first jaw group 19 there is the second group jaw group 20, also consisting of open C-shaped elements 24, spaced apart in the vertical direction, staggered with respect to the interfacing shaped elements 22 and fitted to a fastening plate 25. However, it should be noted that this second jaw group 20 can be displaced with respect to the slide commanded by elastic elements 27 in one direction and by a suitable loading actuator group of the elastic elements in the opposite direction.

More specifically, the fastening plate 25 carrying the shaped elements 24 of the second jaw group 20 can be displaced along a lower guide 26 formed in the slide 16. The elastic elements 27 are real springs that act between the plate 25 and a vertical wall 28 fixed to the slide 16 that normally keep such a plate 25 spaced apart from the quoted vertical wall 28. The aforementioned loading actuation group, on the other hand, causes the movement of the second jaw group 20 with compression and loading of the elastic elements 27. Such an actuator group consists of a motor reducer 29, fixed to the wall 28, which carries a rotary command plate 30. Hinged to the rotary plate 30 in eccentric position, free to translate in a bushing 50, there is a drawbar 31 that passes into a slot 43 of the wall 28 and acts to take the displaceable second jaw group 20 towards a pair of first hooking elements 32 integral with the fixed vertical wall 28. The drawbar 31 foresees an end stop nut 51 and an oscillating joint 52 arranged at the other end of the bar, integral with the plate 25. Such a displacement allows such first hooking elements 32, capable of oscillating, to engage in a pair of second hooking elements 33 integral at the rear with the fastening plate 25 of the mobile second jaw group 20. The hooking elements 32, 33 in the example are hook-shaped and engage with curved ends arranged upside-down interfacing so that they match each other.

The first hooking elements 32 are hinged at 34 to a pair of supports 35 integral with the wall 28 and are normally each pushed upwards by a spring 36 interacting with a respective support 37. A pair of bars 38 rests on top of the first hooking elements 32 and can be actuated downwards through an upper plate 39 that interacts with a bridge element 40, when the slide 16 carrying the grinding mechanism 14 is taken inside the outer casing 12.

Finally, it must be noted that the slide 16, beneath the pair of jaw groups 19 and 20, foresees an opening 41 that interfaces above the collection drawer 15 underneath to allow the ground glass to fall. The collection drawer 15 can slide on guides 42 integral with the bearer structure 13.

The operation of such a machine according to the present invention is simple and in any case made easier to understand by the attached figures.

In the initial position the machine has the lower collection drawer 15 closed and the upper slide 16 extracted with the grinding mechanism 14 in open position ready to receive a glass bottle 21 to be ground.

The bottle 21 is therefore inserted in the space between the pair of jaw groups 19 and 20, where the second jaw group 20 is at rest away from the first jaw group 19.

Then the slide 16 is pushed so as to be taken back within the outer casing 12. This inward translation movement of the slide 16 causes an engagement of the upper plate 39, carried by the wall 28 integral with the slide 16, with the bridge element 40 integral with the bearer structure 13.

The upper plate 39 is pushed downwards with descent of the bars 38 that act on the two hooking elements 32 disengaging them from the respective hooking elements 33. The springs, i.e. the elastic elements 27, are thus free to expand their load causing the second jaw group 20 to interact with the first jaw group 19 grinding the bottle 21 arranged inside them.

Indeed, the interfacing shaped elements 22 and 24 insert together, interpenetration with each other since they are arranged staggered, and break the glass of the bottle 21.

The various pieces of glass fall downwards and, passing into the opening 41, fall into the collection drawer 15.

At this point the machine is ready for another breaking cycle of a further bottle and for such a purpose the motor reducer 29 is activated that makes the plate 30 rotate anti-clockwise, as shown in the figures.

Such a rotation, through the bar 31 that passes in the slot 43, drags the fastening plate 25, i.e. the second jaw group 20, back towards the receiving position by introduction of a bottle to be broken.

Half way through the rotation of the disc 30 the engagement between the hooking elements 32 and the respective hooking elements 33 takes place with locking of the fastening plate 25 and of the second jaw group 20 in open position with respect to the first jaw group 19.

At this point it is possible to repeat the cycle until the collection drawer 15 has received the broken parts of a substantial series of bottles.

The extraction of the collection drawer 15 allows what remains of all of the bottles, taking up a minimum amount of space, to be thrown away in a quick and simple manner so as to be immediately ready to receive the ground pieces of other bottles.

The shaped elements 22 and 24 of the jaw groups 19 and 20 can be made from iron, without particular production requirements.

The hooking elements 32 and the respective hooking elements 33 can be made from tempered steel for better and longer-lasting operation.

It has thus been seen that the machine for glass grinding, in particular for glass fine-grinding according to the present invention achieves the purposes outlined previously.

The machine for glass fine-grinding of the present invention thus conceived is susceptible to numerous modifications and variants, which are all covered by the same inventive concept.

Moreover, in practice, the materials used, as well as their sizes and the components, can be whatever according to the technical requirements.

## Claims

1. Machine for glass grinding, in particular for glass fine-grinding, **characterised in that** it comprises an outer casing (12) that encloses a bearer structure (13), a grinding mechanism (14) and a collection drawer (15) underneath for the ground glass, said grinding mechanism (14) being arranged on a slide (16) that can translate between a position inserted in the outer casing (12) and an extracted position and consisting of a pair of grinding jaw groups (19, 20) arranged staggered and interacting with each other, in which one of said grinding jaw groups (20) is mobile with respect to the other pushed into such engagement by elastic elements (27) in a first direction, with a loading actuator group (29, 30, 31) of the elastic elements in the opposite direction being foreseen, with there also being foreseen hooking elements (32, 33) that engage said mobile second jaw group (20) in detached position with respect to the fixed first jaw group (19) to allow the introduction of a bottle (21) to be broken.

2. Machine according to claim 1, **characterised in that** said grinding jaw groups (19, 20) comprise open C-shaped elements (22), spaced apart in the vertical direction and fitted to a fastening plate (23) on one side (at 19) interfacing with open C-shaped elements (24), spaced apart in the vertical direction, staggered with respect to the interfacing shaped elements (22) and fitted to a fastening plate (25).

3. Machine according to claim 2, **characterised in that** said elastic elements are springs (27) that act between the plate (25) and a vertical wall (28) fixed to the slide (16) the normally keep such a plate (25) away from said vertical wall (28).

4. Machine according to claim 2, **characterised in that** said loading actuator group of the elastic elements (27) consists of a motor reducer (29), fixed to the slide (16), which carries a rotary command plate (30), to which it is hinged in eccentric position, free to translate in a bushing (50) in which a drawbar (31) slides that passes into a slot (43) of the wall (28) and acts to take the mobile jaw group (20) back towards hooking elements (32) integral with the vertical wall (28) that interact with hooking elements (33) integral with the mobile jaw group (20), with an end stop nut (51) of the drawbar (31) and an oscillating joint (52), arranged at the other end of the bar, integral with the wall (28), being foreseen.

5. Machine according to claim 1, **characterised in that** said hooking elements (32) can oscillate and are hook-shaped just like said hooking elements (33) and their curved ends are arranged upside-down interfacing so that they match each other.
